(19) **Europäisches Patentamt / European Patent Office / Office européen des brevets**

(11) **EP 2 102 688 B1**

(12) **EUROPEAN PATENT SPECIFICATION**

(45) Date of publication and mention
of the grant of the patent:
**19.06.2013 Bulletin 2013/25**

(21) Application number: **07859629.3**

(22) Date of filing: **26.12.2007**

(51) Int Cl.:
***G01V 3/06*** (2006.01)

(86) International application number:
**PCT/IN2007/000603**

(87) International publication number:
**WO 2008/081469 (10.07.2008 Gazette 2008/28)**

(54) **A PROCESS AND DEVICE FOR MEASUREMENT OF SPECTRAL INDUCED POLARIZATION RESPONSE USING PSEUDO RANDOM BINARY SEQUENCE (PRBS) CURRENT SOURCE**

VERFAHREN UND VORRICHTUNG ZUR MESSUNG DER SPEKTRAL AUSGELÖSTEN POLARISATIONSREAKTION MIT EINER PSEUDO-RANDOM-BINÄREN-SEQUENZ (PRBS)-STROMQUELLE

PROCEDE ET DISPOSITIF DE MESURE DE LA REPONSE DE POLARISATION SPECTRALE INDUITE UTILISANT UNE SOURCE DE COURANT A SEQUENCE BINAIRE PSEUDO ALEATOIRE (PRBS)

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **03.01.2007 IN DE00302007**

(43) Date of publication of application:
**23.09.2009 Bulletin 2009/39**

(73) Proprietor: **Council of Scientific & Industrial Research**
**New Delhi 110 001 (IN)**

(72) Inventors:
- **RAMMOHAN PRASAD, Tadepalli**
  **Hyderabad 500 007**
  **Andhra Pradesh (IN)**
- **RAMAYYA, Boppana, Dasaradha**
  **Hyderabad 500 007**
  **Andhra Pradesh (IN)**
- **RAO, Yelamanchili, Purnachandra**
  **Hyderabad 500 007**
  **Andhra Pradesh (IN)**

(74) Representative: **Graf von Stosch, Andreas et al**
**Graf von Stosch**
**Patentanwaltsgesellschaft mbH**
**Prinzregentenstrasse 22**
**80538 München (DE)**

(56) References cited:
**WO-A-2004/072684          US-A- 3 967 190**
**US-A1- 2006 028 208     US-A1- 2006 186 887**
**US-B1- 6 501 276**

- **DUNCAN P M ET AL: "The development and applications of a wide band electromagnetic sounding system using a pseudo-noise source" GEOPHYSICS, SOCIETY OF EXPLORATION GEOPHYSICISTS, TULSA, OK, US, vol. 45, no. 8, 1 August 1980 (1980-08-01), pages 1276-1296, XP002376292 ISSN: 0016-8033**
- **HELWIG S L ET AL: "The VIBROTEM method" SEG EXPANDED ABSTRACTS, 1999, pages 283-285, XP002490362**
- **HELWIG S L: "Konzept für einen modularen EM-Empfänger" PROCEEDINGS 19. KOLLOQUIUM ELEKTROMAGNETISCHE TIEFENFORSCHUNG, October 2001 (2001-10), pages 50-58, XP002490363 Burg Ludwigstein, Germany**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of the invention:**

The present Invention relates to development of a process and device for the measurement of spectral induced polarization response using Pseudo Random Binary Sequence (PRBS) current source.

The main utility of the invention is to take spectral induced polarization measurements in the field. These measurements are used in the exploration of minerals, ground water and hydrocarbons. These measurements will enable to understand mineral texture and discrimination of economic mineralization from barren halos. Moreover they are also useful in the environmental applications such as mapping of zones with some organic contaminants in the soil.

**Background and prior art of the invention:**

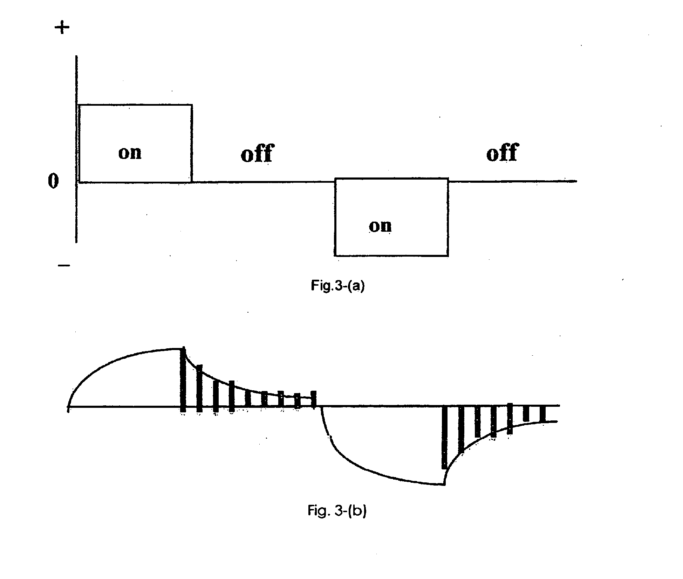

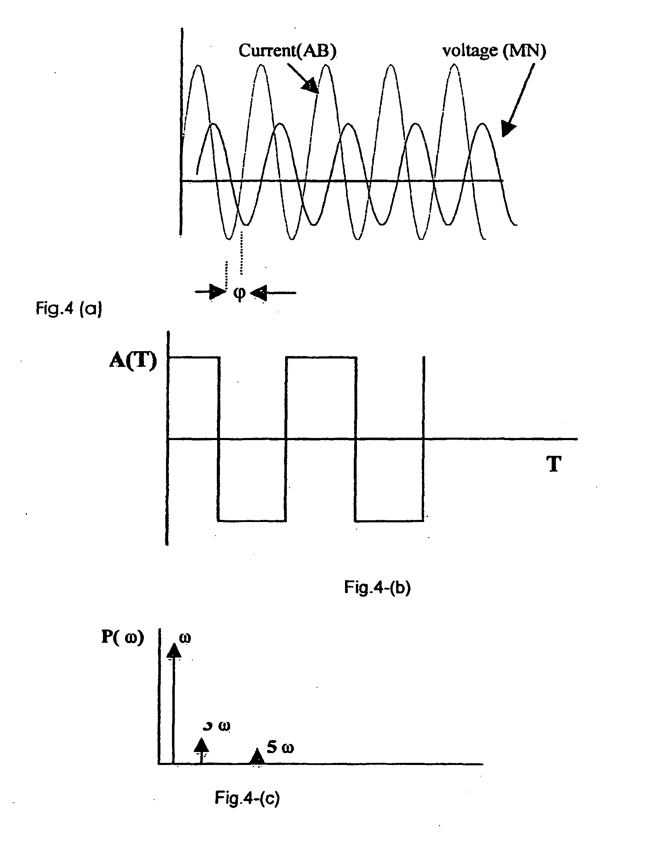

Conventional methods in taking induced polarization measurements are Frequency domain wherein measurements are taken at selected frequencies (fig.4-a) and time domain wherein measurements are taken from decaying wave form (fig.3-b).

Considerable time and energy is expended for taking measurements in frequency domain. In time domain even though data acquisition is faster and contains wide band information, the signal to noise ratio deteriorates at later times. Also tellurics contribute as a major source of noise while taking above measurements.

The response of the ground to an externally applied excitation is measured at one or more frequencies and one or more samples of transfer function are obtained in the frequency domain: The complete information about the behavior of the system requires measurements on infinite range of frequencies, starting from d.c. which is evidently not possible in practice, and is not even useful for the purpose of exploration. The relevant information in which geophysicists are interested commonly lies in a certain band and it is enough to find the transfer function over the range of that band.

The instruments used for taking the measurements of frequency domain are Ipt-6 high power current source and v-2 induced polarization receiver of Phoenix geophysics ltd, Canada and transmitter ggt-30 and receiver gdp-32 rpip of Zonge engineering research organization, Canada.

Similarly, measurements in the time-domain with a repetitive non-sinusoidal wave form provide the information effectively over a limited frequency range of excitation because in practice it is not possible to measure over an infinite time interval. Generally, samples of transient waveform at short periods after each switching-off of excitation current mainly represent the high frequency response of the system, and late samples mainly represent the low frequency response. Hence the effective frequency window of observation depends on the methodology adopted in sampling of the transient waveform governed by the nature of excitation.

The instruments used for taking the measurements of time domain are Tsq3 time and frequency domain IP transmitter and ipr-10a time domain **I.P** receiver of Scintrex, Canada and Transmitter ggt-30 and receiver gdp-32 tdip of Zonge engineering research organization, Canada.

In the present invention a Pseudo Noise current source is employed for excitation of the ground in order to harness the advantages of even distribution of energy over wide band of frequencies in the spectrum and also to conserve energy, the input spectrum is tailored by selecting the period of the clock and length of sequence. The electrical transfer function of the subsurface is derived in the field from input-input (auto) and input-output (cross) correlation estimates.

DUNCAN P M ET AL: "The development and applications of a wide band electromagnetic sounding system using a pseudo-noise source" GEOPHYSICS, SOCIETY OF EXPLORATION GEOPHYSICISTS, TULSA, OK, US, vol. 45, no. 8, 1 August 1980 (1980-08-01), pages 1276-1296, XP002376292 ISSN: 0016-8033 discloses an electromagnetic sounding system using a Pseudo Random Binary Sequence (PRBS) current source and receiver unit. The current source includes a crystal controlled PRBS generator and a reversing switch driving a bipolar transmitter with the PRBS. A second PRBS generator, identical to the first PRBS generator, is included in a receiver unit and serves as a reverence. In addition, the receiver unit comprises means for carrying out auto- and cross-correlations of the measured and reference signal.

**Objects of the invention:**

The main object of the present invention is to provide a process and a device for measurement of spectral induced polarization response using Pseudo Random Binary Sequence (PRBS) current source which obviates the drawbacks as detailed above.

Another object of the present invention is to provide a measurement device specially tailored for efficient data acquisition and subsequent processing for induced polarization prospecting over a wide band of frequencies.

Another object of the present invention is to provide a process for measurement of complex resistivity in field using pseudo noise source.

Still another object of the present invention is to provide a device for exploration of disseminated ore bodies, ground water, hydrocarbons and pollution studies.

Yet another object of the present invention is to provide a device capable of exciting the sub surface over a wide band of frequencies preferably over two or three decades, with power distributed evenly over the entire band.

A further object of the present invention is to provide a device with provision to tailor the band width of excitation as per application.

A still further object of the present invention is to provide a device which improves the signal/noise ratio (s/n) of the measured signal in addition to the ability to reject the uncorrelated noise, like "tellurics" in field.

Still yet another object of the present invention is to provide a device which is capable of obtaining IP phase angle spectrum over useful and normal band of frequencies at a time in the field.

**Summary of the invention:**

Accordingly, the present invention provides a device according to claim 1.

In an embodiment of the present invention, a process for measurement of spectral induced polarization response using Pseudo Random Binary Sequence (PRBS) current source exhibiting the features of claim 2 is provided, wherein the uncorrelated noise is rejected by using correlation method; and thereby signal/noise ratio is improved substantially as the stacking process is used, gives the phase angle of the subsurface over useful and normal band of frequencies at a time in the field.

In another embodiment of the present invention, high voltage power supply (2) provides a DC Voltage up to 500 Volts at 1 A to the IGBT bridge.

In yet another embodiment of the present invention, low voltage power supply (3) as + 12 Volts DC is supplied to IGBT bridge driver circuit.

In a further embodiment of the present invention, precision GPS time and frequency references (4,9),generate stable (1 in $10^{11}$) 10 MHz clock and feed to scaler/divider.

In another embodiment of the present invention, scaler/ divider (5, 10) generates 200Hz 4 Hz clocks.

In another embodiment of the present invention, PRBS generator (6, 11) input is taken from scaler/divider and Pseudo Random Binary Sequences of lengths 31, 63 and 127 are generated.

In yet another embodiment of the present invention, IGBT driver (7) trigger pulses as per the input PRBS sequence are generated.

In another embodiment of the invention, IGBT current switching bridge (8) current is switched alternately (+ -) into the ground through current electrodes (AB) on getting trigger pulses from the driver.

In one more embodiment of the invention, over load protection built into the IGBT driver (7) current is sensed and triggers to the IGBT bridge are switched OFF in case current exceeds the limit.

In a further embodiment of the invention, signal from potential electrodes (MN) is amplified 10 times by the pre-amplifier (13) with low noise output, simultaneously providing high input impedance.

In yet another embodiment of the invention, compensator for self potential across potential electrodes self potential of the ground up to maximum of + 750 mV to -750 mV is cancelled.

In one more embodiment of the invention; output signal from the pre-amplifier is further amplified by amplifier (14) in steps of 1, 10 and 100 which can swing up to $\pm$ 5 Volts.

In yet another embodiment of the invention, sample timer (10) sampling pulses for Data acquisition and clock pulses for anti aliasing filters are generated.

In another embodiment of the invention, data acquisition card (16) residing in PCMCIA slot of laptop computer analog samples from reference and signal channels are converted into digital data with 16 bit resolution.

In a further embodiment of the invention, auto and cross correlation estimates of acquired data are computed.

In one more embodiment of the invention, sub-surface is excited with PRBS current waveform, the power distributed evenly through out the band 0.03 Hz to 100 Hz and provision is made to tailor the band width of excitation.

**Brief description of the drawings:**

In the drawings accompanying this specification

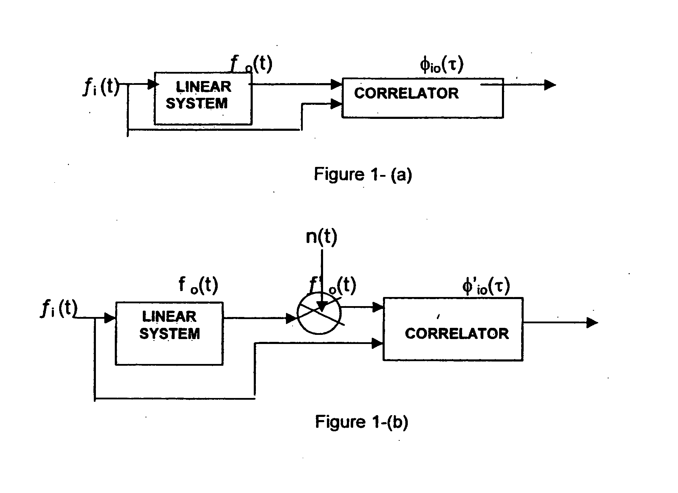

Figure 1-(a) represents determination of unit impulse response of a linear System by correlation method.
Figure 1-(b) represents determination of unit impulse response of a linear System under disturbance

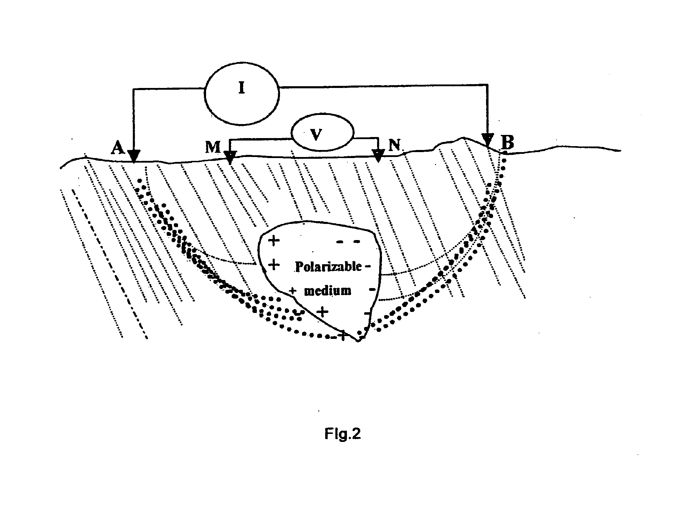

Figure 2 represents general field set up for Induced polarization measurements
Figure 3-(a) represents Interrupted Bipolar current switching into the subsurface for taking measurements in time domain
Figure 3-(b) represents recorded decaying voltage across potential electrodes (MN) after current is switched off

Figure 4-(a) represents phase difference between injected current (AB) and recorded voltage (MN) for taking measurements in frequency domain

Figure 4-(b) represents alternate use of bipolar square wave energization

Figure 4-(c) represents power spectrum of figure 4-(b)

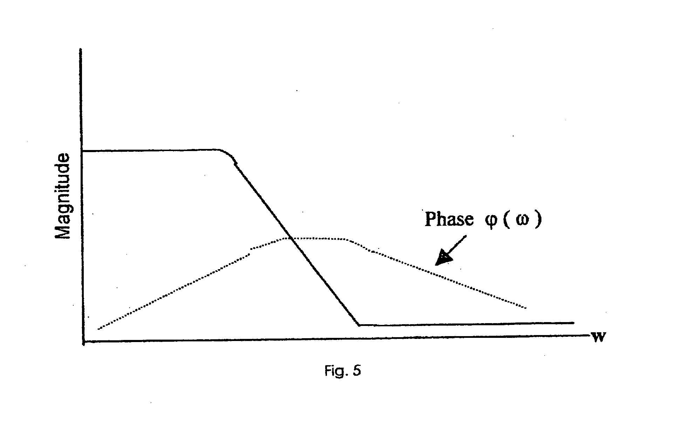

Figure 5 represents typical plot of magnitude and phase spectrum of complex resistivity of polarizable target in the subsurface

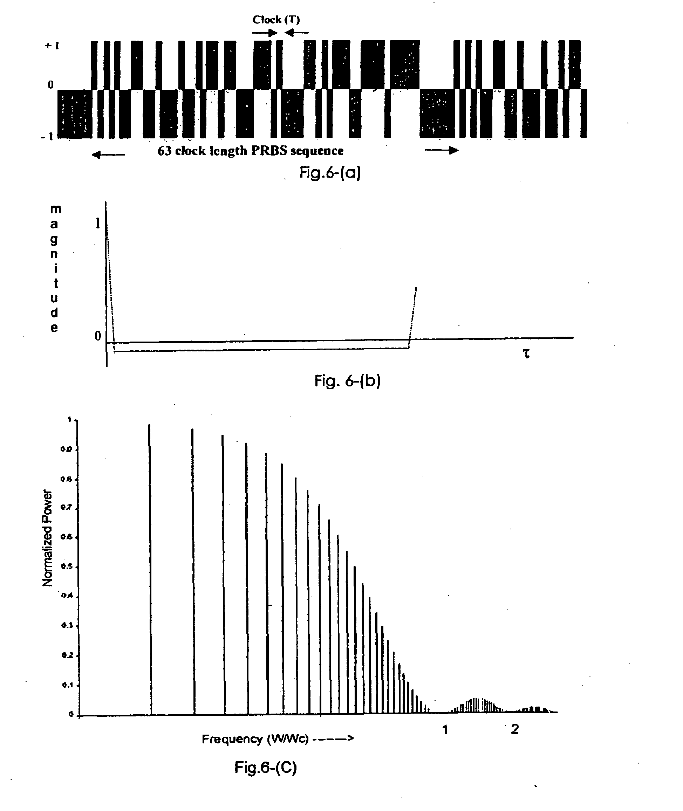

Figure 6-(a) represents an example of 63 clock length Pseudo Random Binary Sequence

Figure 6-(b) represents the auto correlation plot of PRBS

Figure 6-(c) represents the power spectrum of PRBS

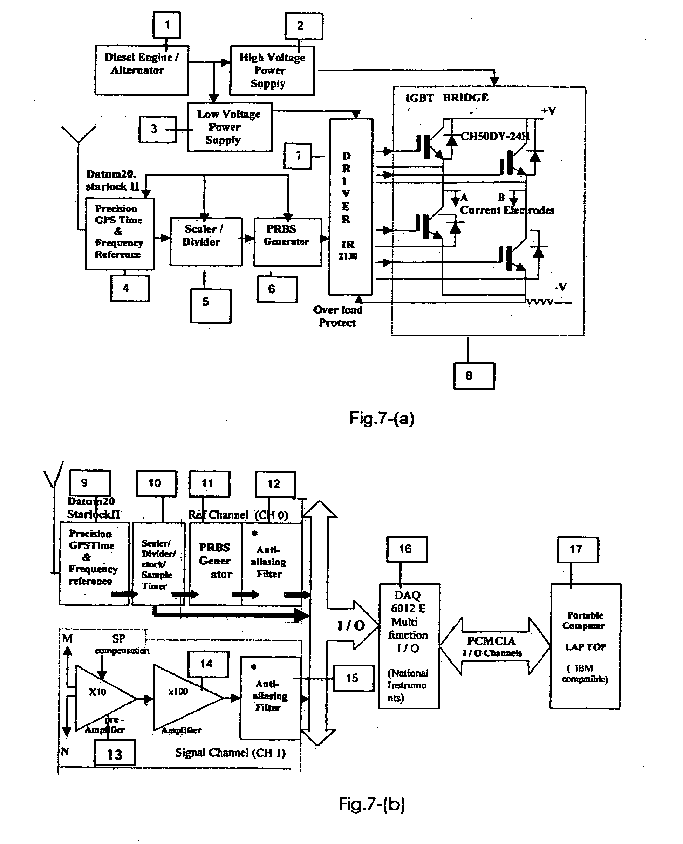

Figure 7-(a) represents block diagram of PRBS current source (500 VA capacity; 500V, 1Amp; 100V, 5Amps)

Figure 7-(b) represents block diagram of receiver

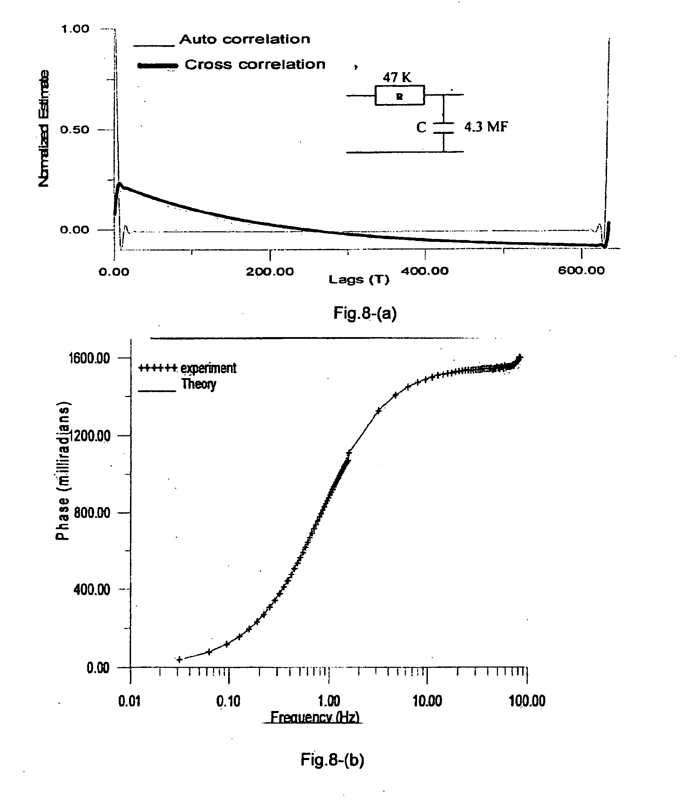

Figure 8-(a) represents auto and cross correlation estimate plots of RC network used for simulating a target in the subsurface using device

Figure 8-(b) represents phase spectrums of RC network (to simulate a target in the Subsurface) both experimental and theoretically computed

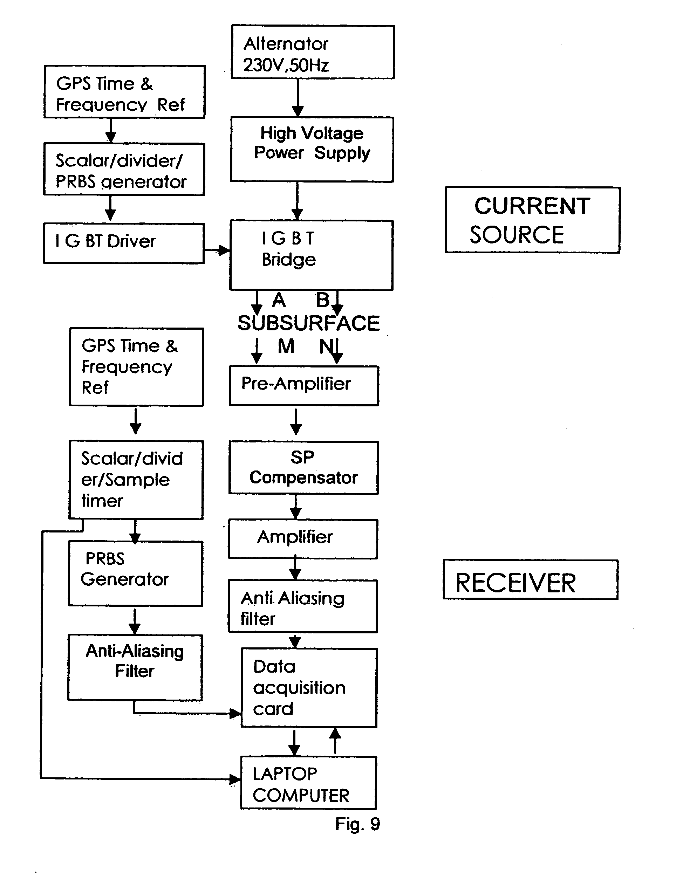

Figure 9 represents process flow chart of device

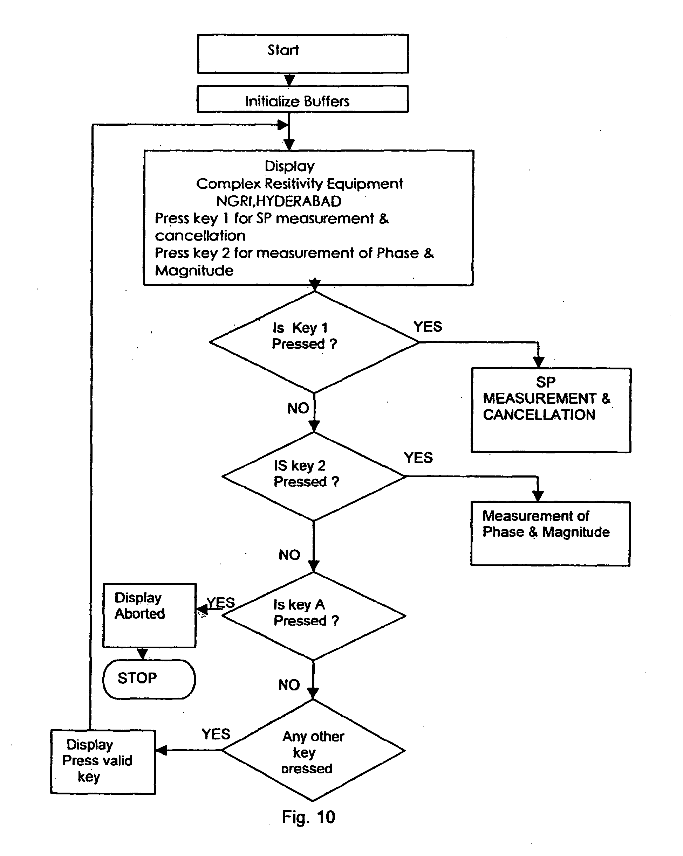

Figure 10 represents flow chart of main program

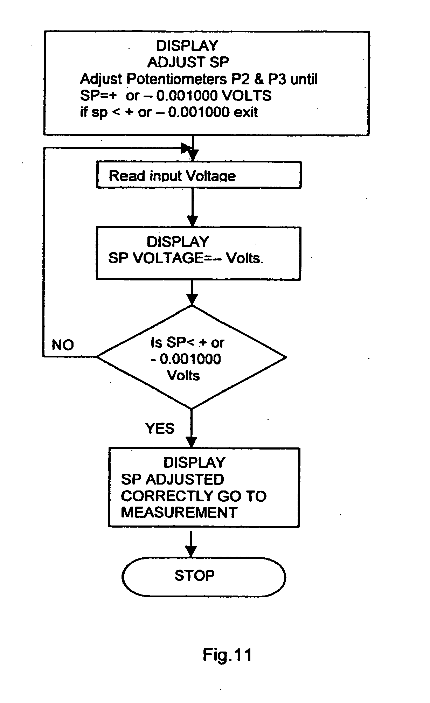

Figure 11 represents flow chart of SP measurement and cancellation program

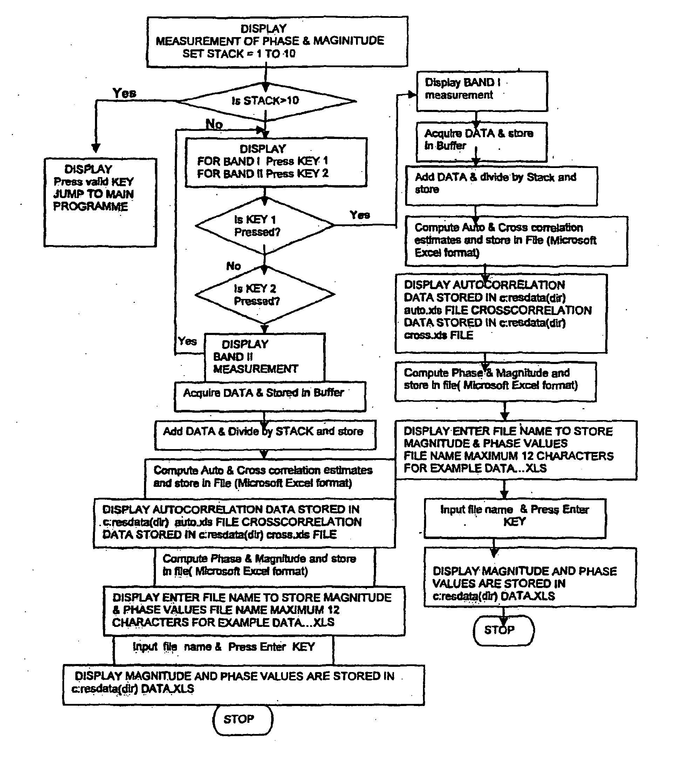

Figure 12 represents flow chart for measurement of magnitude and phase program

Table 1 represents spectrum, clock frequency and sequence length of excitation

**Detailed description of the invention:**

The present invention provides a process and a device for measurement of spectral induced polarization response using Pseudo Random Binary Sequence (PRBS) current source, which comprises PRBS current source, which includes an alternator to derive power, high voltage power supply for feeding the DC power to the insulated gate bipolar transistor (IGBT) bridge, low voltage power supply to power the IGBT driver circuit, precision GPS time and frequency reference for deriving 10 MHz clock, scaler/divider to feed clock to the PRBS generator, PRBS generator to generate PRBS sequence, IGBT driver to drive IGBT's of the bridge, IGBT current switching bridge to switch current in to the sub-surface through current electrodes and receiver system, essentially a digital correlator of reference and signal channels for computing electrical transfer function of the subsurface, which includes precision GPS time and frequency reference which is synchronized with current source, generates 10 MHz clock that is fed as input to scaler/divider, scaler/divider provides clock to PRBS generator, PRBS generator outputs a sequence identical to that of current source as an input to reference channel, sample timer to provide sampling pulses to data acquisition card, pre-amplifier of signal channel to provide high input impedance and gain for the signal received from subsurface through potential electrodes (MN), SP compensator to cancel the self potential across potential electrodes, amplifier for improving the signal level, matched anti aliasing filters one for signal channel, another for reference channel for removing aliasing effects, Multi function data acquisition Personal Computer memory card international Association Card (PCMCIA) to sample and convert signal and reference inputs to digital form, lap top computer to acquire and store in memory through PCMCIA card, software developed relating to data acquisition, auto and cross correlation, stacking, Discrete Fourier Transform (DFT) and operator interactive soft ware to enter parameters and display the results.

In accordance to an embodiment of the present invention, process employs a pseudo noise current source (Pseudo random binary sequence) for excitation of sub surface (ground) and auto & cross correlation estimates of the received signal for obtaining the transfer function of the subsurface. The energy of the excitation waveform is distributed evenly over the entire band of frequency (0.03 Hz - 100 Hz). The sub surface is excited with the above excitation waveform. The band- width of the excitation can be tailored. Voltage samples are picked up by the receiver electrodes and also from reference waveform which is synchronized with the excitation wave form. The above samples are used for arriving at input-input (Auto) and Input-output (Cross) correlation estimates. The electrical transfer function of the subsurface is obtained by transforming the auto and cross correlation estimates in to frequency domain by DFT Software. The transfer function in the form of frequency versus phase and frequency versus magnitude is plotted in the field it self. Signal to noise ratio is improved in addition to the rejection of uncorrelated noise. The uncorrelated noise in this case is "Tellurics" in the field. The induced polarization (IP) phase angle spectrum is obtained over useful normal band of Frequencies at a time in the field. The mean accuracy of measurements is better than 1% in Band-I and better than 2% in Band-II respectively.

In accordance to another embodiment of the present invention current source of the device switches PRBS current waveform in to the subsurface and lap top computer based receiver of the device acquires, processes the data, computes and display the electrical transfer function of the subsurface on the screen in the field itself.

In accordance to yet another embodiment of the present invention current source and receiver are synchronized using precision GPS time and frequency references in order to eliminate physical linking between current source and receiver through a cable.

In accordance to still another embodiment of the present invention software developed performs the functions of data acquisition, display of SP measurement and cancellation, computation of auto and cross correlation estimates, stacking (to improve signal to noise ratio), DFT (for obtaining phase and magnitude spectrum),data transfer and operators interactions (to enter parameters and display of results).

The present invention employs a pseudo noise current source for excitation of the ground and extracts the electrical transfer function of the subsurface from the input-input (auto) and input-output (cross) correlation estimates derived in the field. Van Voorhis etal (1973) and Pelton etal (1978) have shown that complex Resistance of polarizable target may be expressed as

$$Z(\omega) = R_0 \left\{ 1 - m \left[ 1 - \frac{1}{1 + (i\omega t)^C} \right] \right\}$$

Where, $Z(\omega)$ - complex resistance, $R_0$ - constant (Resistance at zero frequency) m - Chargeability, t - time constant, $\omega$ - angular frequency, C -value ranges from 0.25- 0.5

Various models have been examined by the above authors and it is shown that it is a simple cole-cole model that describes a symmetrical 'peak' in a plot of log phase Vs log frequency. The 'peak ' in the I.P phase angle spectrum as regards to it's magnitude and location along the frequency scale appears to be caused by the type of texture, grain size, and sulfide concentration (Nelson, P.H.etal.)

Application of pseudo noise (p-n) sequences whose auto correlation approaches an impulse is well known in Geophysics. The works of Foster & Sloane (1972) in neutron logging, Quincy etal. (1974), Duncan, P.M.,etal(1980)in the application of wide band e.m sounding problems bring out clearly the ease with which maximal length sequences can be generated and also the advantages of such sources as regards the more even distribution of energy over wide band of frequencies in the spectrum. In order to conserve energy, the input spectrum can be tailored by choosing the period (T) of the clock and the length (n) of the sequence.

The input-output cross correlation $\phi_{io}(\tau)$ of a linear system with random Stationary input $f_i(t)$ and output $f_o(t)$ according to definition is

$$\phi_{io}(\tau) = Lim_{T \to \infty} \frac{1}{2T} \int_{-T}^{+T} f_i(t) f_0(t+\tau) dt \qquad (1)$$

the above eqn, can be written as

$$\phi_{io}(\tau) = Lim_{T \to \infty} \frac{1}{2T} \int_{-T}^{+T} f_i(t) dt \int_{-\infty}^{+\infty} h(v) f_i(t+\tau-v) dv \qquad (2)$$

by inverting the order of integration ,we have

$$\phi_{io}(\tau) = \int_{-\infty}^{+\infty} h(v) dv \ Lim_{T \to \infty} \frac{1}{2T} \int_{-T}^{+T} f_i(t) f_i(t+\tau-v) dt \qquad (3)$$

Since

$$\phi_{ii}(\tau-v) = Lim_{T \to \infty} \frac{1}{2T} \int_{-T}^{+T} f_i(t) f_i(t+\tau-v) dt \qquad (4)$$

eqn (3) can be written as

$$\phi_{io}(\tau) = \int_{-\infty}^{+\infty} h(v) \ \phi_{ii}(t - v)dv \qquad (5)$$

Taking Fourier transform both sides, we have

$$\frac{1}{2\pi}\int_{-\infty}^{+\infty}\phi_{io}(\tau)e^{-j\omega\tau}d\tau = \frac{1}{2\pi}\int_{-\infty}^{+\infty}e^{-j\omega\tau}d\tau\int_{-\infty}^{+\infty}h(v)\ \phi_{ii}(\tau-v)dv \qquad (6)$$

which yields,

$$\psi_{io}(\omega) = H(\omega) \times \psi_{ii}(\omega) \qquad (7)$$

where $\psi_{io}(\omega)$ and $\psi_{ii}(\omega)$ are the cross and Auto power density spectrums respectively.

This result shows that the cross power density spectrum of a linear system is the product of system function and the Auto power density spectrum.

Above Eqn can be written as

$$H(\omega) = \Psi_{io}(\omega) / \Psi_{ii}(\omega) \qquad (8)$$

In eqn .(7) & (8), the phase spectrum of $\psi_{io}(\omega)$ is that of $H(\omega)$ and since $\varphi_{ii}(\omega)$ has zero phase spectrum and the amplitude spectrum of $\psi_{io}(\omega)$ is the product of the amplitude spectrum $H(\omega)$ and $\psi_{ii}(\omega)$. Fig.1-(a) & Fig.1-(b) illustrates the manner in which Interfering signals, which bear no relation to the test signal, are eliminated by the averaging action of the correlator integral. Thus if the output $f'_o(t)$ consists of the wanted signal $f_o(t)$ with added noise component n (t), the cross correlation function $\Phi'_{io}(\tau)$ consists of two terms $\phi_{io}(\tau)$ and $\phi_{in}(\tau)$. If, $f_i(t)$ and n(t) are un correlated, then $\phi_{in}(\tau)$ = 0. Therefore,

$$\phi'_{io}(\tau) = \phi_{io}(\tau) + \phi_{in}(\tau) \approx \phi_{io}(\tau) \qquad (9)$$

and hence the result is unaffected by interfering noise.

The technique is expected to reject Tellurics', which constitutes a major source of noise in I.P exploration. Also, the process of removal of inductive coupling effects in the field can be made very effective as the discrete phase spectrum obtained is composed of several closely spaced frequencies.

Conventionally available IP field survey equipment contains provision to make measurements at a number of selected frequencies in the frequency domain (Fig. 4-a) or measure the samples of decaying waveform (Fig.3-b) in time domain .**As** a result, while considerable time and energy is expended for making several measurements in frequency domain the acquisition of data in the time domain ,though faster, contains wide band information and signal to noise ratio(s/n) deteriorates at later times. Also 'Tellurics' constitutes a major source of noise in field. Hence it is desirable that the device is used for taking Spectral Induced Polarization (SIP) measurements has the following features:

1. Excitation of subsurface over a wide band of frequencies, preferably over two or three decades, with power distributed evenly over the band,
2. Provision to tailor the band width of excitation,
3. Improves signal to noise ratio(s/n) of measured signal in addition to the ability to reject uncorrelated noise in field and
4. The IP Phase angle spectrum over useful and normal band of frequencies is obtained at a time in the field.

The selection of the Pseudo Random Binary Sequence (PRBS) current for subsurface energisation (Fig.6-a) appears appropriate and fulfills the requirements mentioned above. Two freely adjustable parameters 'fc', the clock frequency and 'n', the sequence length parameter characterize the PRBS. The sequence repeats after $2^n - 1$ clocks. In Fig.6-(a),'n' is equal to 5 and the PRBS repeats after 63 clocks. The auto-correlation function of PRBS appears as a comb of repeated triangles as shown in Fig.6-(b) and as $n \to \infty$ the autocorrelation approaches an impulse. The power spectrum of the PRBS (Fig.6-c) which is a Fourier transform of the autocorrelation function and consists of lines equally spaced in frequency by fc / 2$^n$ - 1, the envelope being Sinc$^2$ function having its first zero at the clock frequency fc. The measured data are cross-correlation estimates between the observed voltage at the potential electrodes **(MN)** and an exact copy of the PRBS current injected into the subsurface through current electrodes (AB). If both 'n' and 'fc' are large, these estimates make up the 'impulse response' of the earth (subsurface) for keeping aliasing effects to minimum. The signal channel consists of low noise front end amplifier with nominal (x **.10**) gain and provision to compensate for SP (Self potential) across potential electrodes (MN).The anti-aliasing filter present in this channel is matched to better than 0.5% to the filter in reference channel.

The input to the digital correlator are the samples fi (kτ) of the sequence of reference channel (CH0) and f0(kτ) of signal channel(CH1). The correlator computes the Auto and Cross correlation estimates. A laptop computer based equipment was developed for measurement of spectral induced polarization response of subsurface (complex resistivity). Correlation techniques were used to obtain the transfer function of the subsurface (ground).Development of the equipment can be broadly classified into two parts, hardware and software. Hardware is further divided into PRBS (Pseudo random binary sequence) Current source and laptop computer based Receiver.

The block diagram of the current source is shown in Figure.7-(a) and flow chart of the process as shown in figure.9. Power is derived from alternator (1) 230 Volts, 50Hz, 1 Kva. The voltage from the generator is converted into 100V - 500V DC in steps of 100 Volts using 500 VA transformer, 600 Volts,5A bridge rectifier,200 mh 5A choke and 450μf /800Volts filter capacitor(2).This DC voltage is fed to IGBT (Insulated Gate Bipolar transistor) bridge(8). Low voltage power supply (3) 12Volts, 0.5 Amps DC is derived using low voltage transformer, Low power bridge rectifier and LM7812 Voltage regulator. This DC Voltage is used as power supply to IGBT Driver (7) circuit(IR 2130).10 Mhz output signal is derived from precision GPS(4)time and frequency generator (Datum STARLOC-II GPS) which is powered by 12 Volts,7AmpH battery. This signal is locked to the Satellite clock The stability of the clock is 1 in 10$^{11}$. This signal is fed to scaler/divider. The outputs of the scaler/divider are 4 Hz and 200 Hz. The outputs of the scaler/divider are fed as input to PRBS generator, consisting of 7 stage shift register, exclusive NOR gate. The PRBS is generated using shift register chain and there is a provision to select 'fc' ,the clock frequency and 'n', the sequence length parameter to tailor the bandwidth of the input (excitation) spectrum as shown in table I. The output of the PRBS generator is fed to the IGBT driver circuit. The IGBT driver circuit conditions the input to drive IGBT bridge appropriately. The IGBT bridge consists of four(Mitsubishi,CH50DY-24H) IGBT'S. The bridge switches PRBS current waveform into the ground with maximum capacity of 500 Volts, 1 Amp or 100 Volts, 5 Amp through current electrodes A B. The over load protection circuit built in the IGBT driver circuit switches off the triggers when current limit exceeds, to protect IGBT bridge. The applied DC Voltage and average current switched into the ground are displayed on the front panel LCD displays of the current source.

Receiver block diagram shown in Figure.7-(b) and flow chart of the process is shown in Figure.12 essentially a digital correlator and consists of two channels Reference channel and Signal channel. Second PRBS generator which is identical to the one described in the current source provides reference to the correlation. The clock input to this is obtained from the disciplined crystal oscillator of the 10 Mhz Precision GPS time and frequency reference unit (DATUM STARLOC -II) synchronized with the one described in the current source. Sampling and filter clock pulses are derived from scaler/divider. The reference signal is passed through a filter(5 th oder Butterworth low pass)for keeping aliasing effects to minimum. The signal channel (connected to potential electrodes MN) of low noise pre-amplifier with nominal gain(X10) and provision to compensate for the SP (Self Potential) across potential electrodes. Amplifier with the maximum gain of 100 further amplify the signal. The output of the amplifier is passed through the anti aliasing filter (which is matched to better than 0.5 % to the filter in the reference channel).Data acquisition hardware/software consists of DAQ-6012E ,multi function I/O (NATIONAL INSTRUMENTS) PCMCIA card that plugs directly in to the portable (laptop) computer. The PCMCIA card has 16 single channel or 8 fully differential inputs with 16-bit resolution A/D, PGIA(Programmable gain instrumentation amplifier),with external and software trigger facility and maximum sampling rate of 200 K Samples/sec.The inputs to the digital correlator are the samples fi(kτ) of the sequence of the reference channel (CH0) and fo(kτ) of the signal channel (CH1).The correlator computes the auto correlation estimates.

$$\phi_{ii}(m_T) = \frac{1}{N} \sum_{K=0}^{N-1} f_i(k_T) f_i\{(k+m)_T\} \qquad (10)$$

And Cross correlation estimate

$$\phi_{io}(m_T) = \frac{1}{N} \sum_{K=0}^{N-1} f_i(k_T) f_0\{(k+m)_T\} \qquad (11)$$

These expressions show that for a given value of delay mτ, it involves the summation of the products of each sample fo(kτ) with a sample of fi(k-m)τ which occurred 'm' samples earlier. The algorithm collects an array of samples of the reference and signal channel sequences (Eqn.10 & ⁻11) and after stacking (to improve the signal to noise ratio) computes the auto and cross correlation estimates. Consequently in a given time, very small signals can be measured. The time series φ ii and φ io are transformed into the frequency domain using the Discrete Fourier transform (DFT) and division of ψ io(w) by ψ ii(ω) yields the desired frequency response of the sub surface H(w).

$$\frac{1}{2\pi} \int_{-\infty}^{-\infty} \phi_{io}(\tau)e^{-j\omega\tau}d\tau = \frac{1}{2\pi} \int_{-\infty}^{+\infty} e^{-j\omega\tau}d\tau \int_{-\infty}^{+\infty} h(\nu)\ \phi_{ii}(\tau-\nu)d\nu \qquad (12)$$

which yields ,

$$\psi_{io}(\omega) = H(\omega) \times \psi_{ii}(\omega) \qquad (13)$$

where $\psi_{io}(\omega)$ and $\psi_{ii}(\omega)$ are the cross (input-output) power density spectrum and the Auto (input -input) power density spectrum, respectively.

This result shows that the cross (input-output) power density spectrum of a linear system is the product of system function and the Auto (input-input) power density spectrum.

The above equation (13) can be written as

$$H(\omega) = \psi_{io}(\omega)/\psi_{ii}(\omega) \qquad (14)$$

The phase spectrum of $\psi_{io}(\omega)$ is that of H(ω) and since $\psi_{ii}(\omega)$ has zero phase spectrum. The amplitude spectrum of ψio (w) is the product of the amplitude spectrum H (ω) and ψii (w).

The software developed in C++ and NI-DAQ(National instruments) and windows 9x, consists of functions Data acquisition, Display of SP Measurement and cancellation Auto and Cross correlation, Stacking to improve signal to noise ratio DFT software for obtaining phase and magnitude spectrum, Data transfer, Operators interactive software. Simulation measurements were taken with simple RC network. The auto and cross correlation estimates of the network are shown in Fig.8-(a). From the auto(input-input) and .cross (input-output) correlation data, phase and amplitude response (electrical transfer function) is obtained by transforming the data (time series) in to frequency domain(DFT).The phase spectrum of the RC Network is shown in Fig.8-(b). The results show that on an average the measurements are accurate to better than 2% in Band I (0.03-2 Hz) and 1% in Band II(2-100Hz).

Table 1-spectrum, clock frequency and sequence length of excitation.

| Band | Frequency Range(Hz) | Clock Frequency fc(Hz) | Sequence length $2^n$-1 | Correlation Interval (τ ms) |
|---|---|---|---|---|
| I | 0.03-2.0 | 4 | 127 | 50 |
| II | 1.60-100 | 200 | 127 | 1 |

The uncorrelated noise mainly like 'Tellurics' is rejected by using correlation method; signal/noise ratio is improved substantially as the stacking process is used, gives the phase angle of the subsurface over useful and normal band of frequencies at a time in the field, useful for exploration of disseminated sulphides, hydro carbons, useful for in-situ mineral discrimination studies, useful in the environmental applications such as mapping of zones with some organic contaminants in the soil, the removal of induction coupling effects is made very effective as the discrete phase spectrum obtained is composed of several close frequencies, conduct of field survey becomes easier and faster as current source and receiver are synchronized using precision GPS time and frequency references by eliminating cable connection and recovery of electrical transfer function of the subsurface with an accuracy of better than 2%.
The following example is given by way of illustration and therefore should not be construed to limit this scope of the present invention.

**EXAMPLE-1**

PRBS Current source, PRBS Receiver, A.C Power supply, Current and potential electrodes, Cables, 12 Volts, 7 AmpH batteries (2 numbers) and RC Network consisting of R=47KΩ ,C=4.3 $\mu$ F (for simulating the sub-surface). The sequence of operational procedure for the conduct of the experiment in the laboratory is as under.

Connect the Current source and Receiver to respective power supplies i.e 230 Volts,50 Hz AC and 12 Volts, 7AmpH batteries,

Set band switches of the both current source and receiver to Band I,

Set gain switch of the receiver in to 1 position,

Set Current source.out put voltage switch in to 100 Volts position,

Connect the cable from Reset output of the Current source GPS clock to reset input of the Receiver GPS clock.

Connect the output terminals of the Current source to the input of RC network under test through a cable via an attenuator.

Switch ON the Current source, receiver and laptop computer.

Synchronize the shift register clocks of both Receiver and Current source by pushing the reset switch in the Current source.

Disconnect the reset cable.

Short the input terminals of the Receiver.

Click the "'icon" titled Complex Resistivity on the desk top of the laptop computer. The following window is displayed on the screen.

\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*

## COMPLEX RESISTIVITY EQUIPMENT

## N G R I HYDERABAD

\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*

## PRESS KEY 1 FOR SP MEASUREMENT & CANCELLATION

## PRESS KEY 2 FOR MEASUREMENT OF PHASE AND MAGNITUDE

## PRESS KEY A FOR ABORT

## Press 1 and ENTER keys .The following window is displayed on the screen.

\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*

## ADJUST SP

\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*\*

## Adjust Potentiometers P2 & P3 until

## SP=+ or – 0.001000 VOLTS

If sp < + or − 0.003000 exit

Adjust potentiometers until the following message is displayed in the same window.

SP ADJUSTED CORRECTLY GO TO MEASUREMENT

Remove the short between the input terminals of the receiver and connect them to the output of the RC network under the test.

Press ENTER key. The following window is displayed again on the screen.

*******************************************************

COMPLEX RESISTIVITY EQUIPMENT

N G R I HYDERABAD

*************************************************

PRESS KEY 1 FOR SP MEASUREMENT & CANCELLATION

PRESS KEY 2 FOR MEASUREMENT OF PHASE AND MAGNITUDE

PRESS KEY A FOR ABORT

Switch ON the high voltage switch of the Current source.

Press 2 and ENTER keys. The following window is displayed on the screen.

MEASUREMENT OF PHASE AND MAGNITUDE

SET STACK (1 TO 10)

Press 3 and ENTER keys. The following is displayed on the same window

STACK=3

FOR BAND I (0.03Hz-2Hz) press KEY 1

FOR BAND II (1.5Hz-100Hz) press KEY 2

Press 1 and ENTER keys. The following message displayed is displayed in the same window.

BAND I MEASUREMENT

After the measurement is taken over the following message is displayed in the same window

AUTO CORRELATION DATA STORED IN

c: resdata (dir)    auto.xls

CROSS CORRELATION DATA STORED IN

C:resdata (dir)  cross.xls

ENTER FILE NAME TO STORE MAGNITUDE & PHASE VALUES

FILE NAME MAXIMUM 12 CHARACTERS FOR EXAMPLE DATA—.XLS

Input file name DATA.XLS and press enter key. The following message is displayed in the same window.

MAGNITUDE AND PHASE VALUES ARE STORED IN

C: resdata (dir) DATA.XLS

By using MS-EXCEL software the frequency versus phase curve is plotted.

The above procedure is repeated for Band-II measurements. By conducting above experiment transfer function of the RC network (which simulates ground) is obtained in the laboratory. The theoretically computed transfer function of the same RC network is also plotted along with the experimental curve as shown in fig.8-(b)

The main advantages of the present invention are:

1) Excitation of subsurface over a wide band of frequencies, preferably over two or three decades, with power distributed evenly over the band
2) Provision to tailor the bandwidth of excitation.
3) Improved signal to noise (S/N) ratio of the measured signal in addition to the ability to reject uncorrelated noise "Tellurics" in field.
4) The IP phase angle spectrum over useful and normal band of frequencies is obtained at one time in the field.
5) The process of removal of the inductive coupling effects in the field can be made very effective as the discrete phase spectrum obtained is composed of several closely spaced frequencies.
6) Current source and receiver are synchronized using precision GPS time and frequency references in order to eliminate physical linking between current source and receiver through a cable, thus facilitating easier and faster field surveys.
7) This invention facilitates a novel technique and device for the exploration of disseminated ore bodies, ground water, hydro carbons and pollution studies.
8) The present invention also gives a mean accuracy of measurements better than 1% in band -I and 2 % in band-II.

References:

[1] W.H.Pelton, S.H.Ward, P.G.Hallof, W.R.Sill, and P.H.Nelson , "Mineral discrimination and removal of Inductive coupling effects with Multi frequency IP",vol3 , pp588-609 , Geophysics , April 1978.

[2]Vanvoorhis,G.D.,Nelson,P.H, and Orake,T.L. "Complex Resistivity spectrum of poryphyry copper mineralization":GEOPHYSICS, 1973,V.38,PP 49-60.

**EP 2 102 688 B1**

[3]M.R.Foster, and R.N.Sloane, "The use of Pseudo noise sequences to code a pulsed neutron source"vol37, pp481-487,Geophysics,1973.

[4] E.A.Quincy, W.H.Davenport,and T.E.Lindsay,"Preliminary field results for a new transient induction system employing pseudo noise signals",IEEE.

[5] P.M.Duncan, A.Hwang, R.N.Edwards, R.C.Balley,and G.D.Garland "The development and application of wide band EM sounding system using a pseudo noise source",vol,pp 1276-1296,Geophysics,1980.

**Claims**

1. A device for the measurement of spectral induced polarization response using Pseudo Random Binary Sequence (PRBS) current source, which device comprises a PRBS current source and a receiver, wherein:

   - the current source includes an alternator (1) connected to a high voltage supply (2) and also to a low voltage power supply (3),

      - the high voltage power supply (2) being further connected to an IGBT current switching bridge (8),
      - the low voltage power supply (3) being further connected to insulated gate bipolar transistor (IGBT) driver (7), and
      - the driver (7) being connected from one side to three inter-connected components, consisting of Precision GPS time and frequency reference (4), scaler/divider (5) and PRBS generator (6), and from the other side being connected to IGBT current switching bridge (8) for switching a PRBS current waveform into the subsurface, i.e. ground, through current electrodes (A,B),

   - the receiver system is a digital correlator of a reference channel (CH0) and a signal channel (CH1) for computing electrical transfer function of the subsurface,

      - the reference channel (CH0) including a precision GPS time and frequency reference (9) connected to a scaler/divider (10) and a sample timer (10), which scaler/divider (10) is further connected to a PRBS generator (11), the generator (11) being further connected to an anti-aliasing filter (12),
      - the signal channel (CH1) including a pre-amplifier (13) provided with a compensator for self potential across potential electrodes (M,N), which pre-amplifier (13) is connected from one side to potential electrodes (M,N) for measuring the spectral induced polarization response from the subsurface, and from the other side to an amplifier (14), which amplifier (14) is further connected to an anti-aliasing filter (15), and
      - the filters (12,15) being further connected to a Multi-function data acquisition Personal Computer memory card international Association Card (PCMCIA) (16) and a lap top computer (17).

2. A process for measurement of spectral induced polarization response using the device according to claim 1, the process comprising the following steps that are carried out in the PRBS current source:

   - feeding high voltage power generated by alternator (1) and converted into high DC voltage by high voltage power supply (2) to IGBT current switching bridge (8);
   - feeding low voltage power generated by alternator (1) and converted into low DC voltage by low voltage power supply (3) to IGBT driver (7);
   - feeding a clock signal from Precision GPS time and frequency reference (4) via scaler/divider (5) to PRBS generator (6), thereby generating Pseudo Random Binary Sequences;
   - feeding the Pseudo Random Binary Sequences generated by PRBS generator (6) to IGBT driver (7), thereby causing IGBT current switching bridge (8) to switch a PRBS current waveform into the subsurface, i.e. ground, through current electrodes (A,B);

   the process further comprising the following steps that are carried out in the receiver:

   - feeding a clock input from precision GPS time and frequency reference (9) to scaler/divider (10), thereby generating sampling and filter clock pulses;
   - feeding the sampling and filter clock pulses derived from scaler/divider (10) to PRBS generator (11), thereby generating Pseudo Random Binary Sequences;

- feeding the Pseudo Random Binary Sequences generated from PRBS generator (11) via anti-aliasing filter (12) to Multi-function data acquisition Personal Computer memory card international Association Card (PCMCIA) (16) and lap top computer (17), thereby providing reference from reference channel (CH0) to the digital correlator while keeping aliasing effects to a minimum;
- measuring the spectral induced polarization response from the subsurface using potential electrodes (M,N);
- feeding the measured response to pre-amplifier (13) provided with a compensator for self potential across potential electrodes (M,N), thereby amplifying the measured response;
- further amplifying the measured response using amplifier (14);
- filtering the amplified response using anti-aliasing filter (15), thereby reducing aliasing effects;
- feeding the amplified and filtered response from signal channel (CH1) to the Multi-function data acquisition Personal Computer memory card international Association Card (PCMCIA) (16) and lap top computer (17);
- computing electrical transfer function of the subsurface using the reference from the reference channel (CH0) and the amplified and filtered response from the signal channel (CH1).

3. A process for measurement of spectral induced polarization response using Pseudo Random Binary Sequence (PRBS) current source according to claim 2, wherein high voltage power supply (2) supplies DC Voltage of up to 500 Volts at 1 A to the IGBT bridge.

4. A process for measurement of spectral induced polarization response using Pseudo Random Binary Sequence (PRBS) current source according to claim 2, wherein low voltage power supply (3) as + 12 Volts DC is supplied to IGBT bridge driver circuit.

5. A process for measurement of spectral induced polarization response using Pseudo Random Binary Sequence (PRBS) current source according to claim 2, wherein precision GPS time and frequency references (4,9) generate 10 MHz clock with a stability of 1 in $10^{11}$ and is supplied to scaler/divider.

6. A process for measurement of spectral induced polarization response using Pseudo Random Binary Sequence (PRBS) current source according to claim 2, wherein scaler/divider (5, 10) generate clocks of 4 Hz and 200 Hz.

7. A process for measurement of spectral induced polarization response using Pseudo Random Binary Sequence (PRBS) current source according to claim 2, wherein PRBS generator (6,11) input is taken from scaler/divider and Pseudo Random Binary Sequences of lengths 31, 63 and 127 are generated.

8. A process for measurement of spectral induced polarization response using Pseudo Random Binary Sequence (PRBS) current source according to claim 2, wherein IGBT driver (7) trigger pulses as per the input PRBS sequence are generated.

9. A process for measurement of spectral induced polarization response using Pseudo Random Binary Sequence (PRBS) current source according to claim 2, wherein IGBT current switching bridge (8) current is switched alternately (+ -) into the ground through current electrodes (AB) on getting trigger pulses from the driver.

10. A process for measurement of spectral induced polarization response using Pseudo Random Binary Sequence (PRBS) current source according to claim 2, wherein over load protection built into the IGBT driver (7) current is sensed and triggers to the IGBT bridge are switched OFF in case current exceeds the limit.

11. A process for measurement of spectral induced polarization response using Pseudo Random Binary Sequence (PRBS) current source according to claim 2, wherein pre-amplifier (13) high input impedance is presented to the received signal from potential electrodes (M,N) which is amplified 10 times with low noise output.

12. A process for measurement of spectral induced polarization response using Pseudo Random Binary Sequence (PRBS) current source according to claim 2, wherein the compensator for self potential across potential electrodes (M,N) cancels self potential of the ground up to maximum of + 750 mV to -750 mV.

13. A process for measurement of spectral induced polarization response using Pseudo Random Binary Sequence (PRBS) current source according to claim 2, wherein amplifier (14) provides gains of 1, 10 and 100 which can swing up to $\pm$ 5 Volts to the output signal from pre-amplifier; and wherein sample timer (10) generates sampling pulses for Data acquisition and clock pulses for anti aliasing filters.

**14.** A process for measurement of spectral induced polarization response using Pseudo Random Binary Sequence (PRBS) current source according to claim 2, wherein data acquisition card (16) residing in PCMCIA slot of laptop computer converts analog samples from reference and signal channels into digital data with 16 bit resolution; and wherein auto and cross correlation estimates of acquired data are computed.

**15.** A process for measurement of spectral induced polarization response using Pseudo Random Binary Sequence (PRBS) current source according to claim 2, wherein subsurface is excited with PRBS current waveform, the power distributed evenly through out the band 0.03 Hz to 100 Hz and provision is made to tailor the band width of excitation.

**Patentansprüche**

**1.** Vorrichtung zur Messung einer spektral ausgelösten Polarisationsreaktion mit einer Pseudo Random Binären Sequenz (PRBS)-Stromquelle, wobei die Vorrichtung eine PRBS-Stromquelle und eine Empfangseinheit umfasst, wobei:

- die Stromquelle beinhaltet einen mit einer Hochspannungsversorgung (2) und auch mit einer Niederspannungsversorgung (3) verbundenen Generator (1),

- wobei die Hochspannungsversorgung (2) ferner mit einer IGBT-Stromschaltbrücke (8) verbunden ist,
- wobei die Niederspannungsversorgung (3) ferner mit einem Isolierten Gate Bipolartransistor (IGBT)-Treiber (7) verbunden ist, und
- wobei der Treiber (7) von einer Seite mit drei miteinander verbundenen Komponenten verbunden ist, die aus einer Präzisions-GPS Zeit und Frequenz-Referenz (4), einem Scaler/Dividierer (5) und einem PRBS-Generator (6) bestehen, und von der anderen Seite mit der IGBT-Stromschaltbrücke (8) zum Schalten einer PRBS Strom-Waveform mittels Stromelektroden (A, B) auf den Untergrund, d.h. Masse, verbunden ist,

- wobei das Empfängersystem ein digitaler Korrelator eines Referenzkanals (CH0) und eines Signalkanals (CH1) zum Berechnen einer elektrischen Transferfunktion des Untergrunds ist,

- wobei der Referenzkanal (CH0) eine mit einem Scaler/Dividierer (10) verbundene Präzisions-GPS Zeit und Frequenz-Referenz (9) sowie einen Sample-Timer (10) beinhaltet, wobei der Scaler/Dividierer (10) ferner mit einem PRBS-Generator (11) verbunden ist, welcher ferner mit einem Anti-Aliasing-Filter (12) verbunden ist,
- wobei der Signalkanal (CH1) einen Vorverstärker (13) mit einem Kompensator für Eigenpotential-Kreuzpotential-Elektroden (M, N) beinhaltet, welcher von einer Seite mit den Potenzialelektroden (M, N) zum Messen der spektral ausgelösten Polarisationsreaktion vom Untergrund verbunden ist, und von der anderen Seite mit einem Verstärker (14) verbunden ist, welcher ferner mit einem Anti-Aliasing-Filter (15) verbunden ist, und
- wobei die Filter (12, 15) ferner mit einer Multifunktions-Datenakquisitions-Karte vom Typ Personalcomputer-Speicherkarte internationaler Vereinigung (PCMCIA) sowie einem Laptop (17) verbunden sind.

**2.** Verfahren zur Messung einer spektral ausgelösten Polarisationsreaktion mit einer Vorrichtung gemäß Anspruch 1, umfassend die folgenden Schritte, welche in der PRBS-Stromquelle durchgeführt werden:

- Zuführen von vom Generator (1) erzeugtem und mittels der Hochspannungsversorgung (2) in hohe Gleichspannung umgewandeltem Hochspannungsstrom zur IGBT-Stromschaltbrücke (8);
- Zuführen von vom Generator (1) erzeugtem und mittels der Niederspannungsversorgung (3) in niedrige Gleichspannung umgewandeltem Niederspannungsstrom zum IGBT-Treiber (7);
- Zuführen eines Taktsignals von der Präzisions-GPS Zeit und Frequenz-Referenz (4) über den Scaler/Dividierer (5) zum PRBS-Generator (6), wodurch Pseudo Random Binär-Sequenzen erzeugt werden;
- Zuführen der vom PRBS-Generator (6) erzeugten Pseudo Random Binär-Sequenzen zum IGBT-Treiber (7), wodurch die IGBT-Stromschaltbrücke (8) zum Schalten einer PRBS Strom-Waveform mittels der Stromelektroden (A, B) auf den Untergrund, d.h. Masse veranlasst wird;

wobei das Verfahren ferner die folgenden Schritte umfasst, welche in der Empfangseinheit durchgeführt werden:

- Zuführen eines Taktsignals von der Präzisions-GPS Zeit und Frequenz-Referenz (9) zum Scaler/Dividierer (10), wodurch Abtast- und Filtertaktsignal-Pulse erzeugt werden;

- Zuführen der von dem Scaler/Dividierer (10) abgeleiteten Abtast- und Filtertaktsignal-Pulse zum PRBS-Generator (11), wodurch Pseudo Random Binär-Sequenzen erzeugt werden;

- Zuführen der vom PRBS-Generator (11) erzeugten Pseudo Random Binär-Sequenzen über den Anti-Aliasing-Filter (12) zur Multifunktions-Datenakquisitions- Karte (16) vom Typ Personalcomputer-Speicherkarte internationaler Vereinigung (PCMCIA) sowie zum Laptop (17), wodurch dem digitalen Korrelator eine Referenz vom Referenzkanal (CH0) bei Minimierung von Aliasing-Effekten bereitgestellt wird;

- Messen der spektral ausgelösten Polarisationsreaktion vom Untergrund mit den Potenzialelektroden (M, N);

- Zuführen der gemessenen Reaktion zum Vorverstärker (13), welcher mit einem Kompensator für Eigenpotential-Kreuzpotential-Elektroden (M, N) versehen ist, wodurch die gemessene Reaktion verstärkt wird;

- weiteres Verstärken der gemessenen Reaktion mittels des Verstärkers (14);

- Filtern der verstärkten Reaktion mittels des Anti-Aliasing-Filters (15), wodurch Aliasing-Effekte verringert werden;

- Zuführen der verstärkten und gefilterten Reaktion vom Signalkanal (CH1) zur Multifunktions-Datenakquisitions-Karte (16) vom Typ Personalcomputer-Speicherkarte internationaler Vereinigung (PCMCIA) sowie zum Laptop (17);

- Berechnen der elektrischen Transferfunktion des Untergrunds mittels der Referenz vom Referenzkanal (CH0) und der verstärkten und gefilterten Reaktion vom Signalkanal (CH1).

3. Verfahren zur Messung einer spektral ausgelösten Polarisationsreaktion mit einer Pseudo Random Binären Sequenz (PRBS)-Stromquelle gemäß Anspruch 2, wobei die Hochspannungsversorgung (2) eine Gleichspannung von bis zu 500 Volt bei 1 A zur IGBT-Brücke liefert.

4. Verfahren zur Messung einer spektral ausgelösten Polarisationsreaktion mit einer Pseudo Random Binären Sequenz (PRBS)-Stromquelle gemäß Anspruch 2, wobei die Niederspannungsversorgung (3) als + 12 Volt Gleichspannung zur IGBT-Brücken-Treiberschaltung geliefert wird.

5. Verfahren zur Messung einer spektral ausgelösten Polarisationsreaktion mit einer Pseudo Random Binären Sequenz (PRBS)-Stromquelle gemäß Anspruch 2, wobei die Präzisions-GPS Zeit und Frequenz-Referenzen (4, 9) einen 10 MHz-Takt mit einer Stabilität von 1 aus $10^{11}$ erzeugen und zum Scaler/Dividierer geliefert wird.

6. Verfahren zur Messung einer spektral ausgelösten Polarisationsreaktion mit einer Pseudo Random Binären Sequenz (PRBS)-Stromquelle gemäß Anspruch 2, wobei die Scaler/Dividierer (5, 10) Takte von 4 Hz und 200 Hz erzeugen.

7. Verfahren zur Messung einer spektral ausgelösten Polarisationsreaktion mit einer Pseudo Random Binären Sequenz (PRBS)-Stromquelle gemäß Anspruch 2, wobei der Input des PRBS-Generators (6, 11) vom Scaler/Dividierer genommen wird, und wobei Pseudo Random Binär-Sequenzen der Längen 31, 63 und 127 erzeugt werden.

8. Verfahren zur Messung einer spektral ausgelösten Polarisationsreaktion mit einer Pseudo Random Binären Sequenz (PRBS)-Stromquelle gemäß Anspruch 2, wobei der IGBT-Treiber (7) Pulse triggert, wenn aufgrund des Inputs PRBS-Sequenzen erzeugt werden.

9. Verfahren zur Messung einer spektral ausgelösten Polarisationsreaktion mit einer Pseudo Random Binären Sequenz (PRBS)-Stromquelle gemäß Anspruch 2, wobei der Strom der IGBT-Stromschaltbrücke (8) beim Erhalten von Triggerpulsen vom Treiber mittels der Stromelektroden (AB) wechselnd (+ -) auf Masse geschaltet wird.

10. Verfahren zur Messung einer spektral ausgelösten Polarisationsreaktion mit einer Pseudo Random Binären Sequenz (PRBS)-Stromquelle gemäß Anspruch 2, wobei durch einen in den IGBT-Treiber (7) eingebauten Überlastschutz Strom gemessen wird und Auslösepulse für die IGBT-Brücke ausgeschaltet werden, falls der Strom das Limit übersteigt.

11. Verfahren zur Messung einer spektral ausgelösten Polarisationsreaktion mit einer Pseudo Random Binären Sequenz (PRBS)-Stromquelle gemäß Anspruch 2, wobei eine hohe Input-Impedanz des Vorverstärkers (13) dem von den Potentialelektroden (M,N) empfangenen Signal vorgelegt wird, welches 10fach mit niedrigem Rausch-Output verstärkt wird.

12. Verfahren zur Messung einer spektral ausgelösten Polarisationsreaktion mit einer Pseudo Random Binären Sequenz (PRBS)-Stromquelle gemäß Anspruch 2, wobei der Kompensator für Eigenpotential-Kreuzpotential-Elektroden (M,N) ein Eigenpotential der Masse bis zu einem Maximum von +750 mV bis -750 mV aufhebt.

**13.** Verfahren zur Messung einer spektral ausgelösten Polarisationsreaktion mit einer Pseudo Random Binären Sequenz (PRBS)-Stromquelle gemäß Anspruch 2, wobei der Verstärker (14) eine Verstärkung von 1, 10 und 100 liefert, welche bis zu ± 5 Volt vom Vorverstärker zum Outputsignal schwingen kann; und wobei der Sample-Timer (10) Sampling-Pulse zur Datenakquisition und Taktpulse für Anti-Aliasing-Filter erzeugt.

**14.** Verfahren zur Messung einer spektral ausgelösten Polarisationsreaktion mit einer Pseudo Random Binären Sequenz (PRBS)-Stromquelle gemäß Anspruch 2, wobei die in einem PCMCIA-Steckplatz eines Laptops angeordnete Datenakquisitionskarte (16) analoge Samples der Referenz- und Signalkanäle in digitale Daten mit 16 Bit-Auflösung umwandelt; und wobei Auto- und Kreuzkorrelationsschätzungen erfasster Daten berechnet werden.

**15.** Verfahren zur Messung einer spektral ausgelösten Polarisationsreaktion mit einer Pseudo Random Binären Sequenz (PRBS)-Stromquelle gemäß Anspruch 2, wobei der Untergrund mit einer PRBS Strom-Waveform angeregt wird, wobei der Strom gleichförmig über das Band von 0.03 Hz bis 100 Hz verteilt ist und vorgesehen ist, die Bandbreite der Anregung anzupassen.

**Revendications**

**1.** Dispositif de mesure de la réponse de polarisation induite spectrale utilisant une source de courant à séquence binaire pseudo aléatoire (PRBS), lequel dispositif comprenant une source de courant PRBS et un récepteur, dans lequel :

- la source de courant inclut un alternateur (1) connecté à un bloc d'alimentation haute tension (2) ainsi qu'à un bloc d'alimentation basse tension (3) ;

- le bloc d'alimentation haute tension (2) étant en outre connecté à un pont de commutation en courant IGBT (8) ;
- le bloc d'alimentation basse tension (3) étant en outre connecté à un pilote de transistor bipolaire à porte isolée (IGBT) (7) ; et
- le pilote (7) étant connecté, d'un côté, à trois composants interconnectés, consistant en une référence en temps de système GPS Précision et en fréquence (4), un convertisseur d'échelle/diviseur (5) et un générateur PRBS (6), et étant connecté, de l'autre côté, à un pont de commutation en courant IGBT (8) en vue de commuter une forme d'onde en courant PRBS dans la sous-surface, c'est-à-dire le sous-sol, à travers des électrodes de courant (A, B) ;

- le système récepteur est un corrélateur numérique d'un canal de référence (CH0) et d'un canal de signal (CH1) destiné à calculer une fonction de transfert électrique de la sous-surface ;

- le canal de référence (CH0) incluant une référence en temps de système GPS de précision et en fréquence (9) connectée à un convertisseur d'échelle /diviseur (10) et un temporisateur d'échantillonnage (10), lequel convertisseur d'échelle /diviseur (10) est en outre connecté à un générateur PRBS (11), le générateur (11) étant en outre connecté à un filtre anti-repliement (12) ;
- le canal de signal (CH1) incluant un préamplificateur (13) doté d'un compensateur de potentiel auto-induit à travers des électrodes de potentiel (M, N), lequel préamplificateur (13) est connecté, d'un côté, aux électrodes de potentiel (M, N), en vue de mesurer la réponse de polarisation induite spectrale, à partir de la sous-surface, et, de l'autre côté, à un amplificateur (14), lequel amplificateur (14) est en outre connecté à un filtre anti-repliement (15) ; et
- les filtres (12, 15) étant en outre connectés à une carte PCMCIA (Association internationale de cartes de mémoire pour ordinateurs personnels) d'acquisition de données multifonction (16) et à un ordinateur portable (17).

**2.** Procédé de mesure de réponse de polarisation induite spectrale utilisant le dispositif selon la revendication 1, le procédé comprenant les étapes ci-dessous, lesquelles sont mises en oeuvre dans la source de courant PRBS, consistant à :

- appliquer une alimentation électrique à haute tension générée par un alternateur (1) et convertie en haute tension CC par le bloc d'alimentation haute tension (2), à un pont de commutation en courant IGBT (8) ;
- appliquer une alimentation électrique à basse tension générée par l'alternateur (1) et convertie en basse tension CC par le bloc d'alimentation basse tension (3), au pilote IGBT (7) ;
- appliquer un signal d'horloge en provenance de la référence en temps de système GPS Précision et en fréquence (4), par l'intermédiaire du convertisseur d'échelle/diviseur (5), au générateur PRBS (6), ce qui permet de générer par conséquent des Séquences Binaires Pseudo Aléatoires ;
- appliquer les Séquences Binaires Pseudo Aléatoires générées par le générateur PRBS (6), au pilote IGBT (7), ce qui amène par conséquent le pont de commutation en courant IGBT (8) à commuter une forme d'onde en courant PRBS dans la sous-surface, c'est-à-dire le sous-sol, à travers les électrodes de courant (A, B) ;

le procédé comprenant en outre les étapes ci-dessous lesquelles sont mises en oeuvre dans le récepteur, consistant à :

- appliquer une entrée d'horloge provenant de la référence en temps de système GPS de précision et en fréquence (9) au convertisseur d'échelle/diviseur (10), générant ainsi des impulsions d'horloge de filtre et d'échantillonnage ;
- appliquer les impulsions d'horloge de filtre et d'échantillonnage dérivées du convertisseur d'échelle/diviseur (10) au générateur PRBS (11), générant ainsi des Séquences Binaires Pseudo Aléatoires ;
- appliquer les Séquences Binaires Pseudo Aléatoires générées à partir du générateur PRBS (11), par l'intermédiaire du filtre anti-repliement (12), à la carte PCMCIA (Association internationale de cartes de mémoire pour ordinateurs personnels) d'acquisition de données multifonction (16) et à l'ordinateur portable (17), ce qui permet par conséquent de fournir une référence, du canal de référence (CH0) au corrélateur numérique, tout en maintenant à un niveau minimum les effets de repliement ;
- mesurer la réponse de polarisation induite spectrale à partir de la sous-surface, en utilisant les électrodes de potentiel (M, N) ;
- appliquer la réponse mesurée au préamplificateur (13) doté d'un compensateur de potentiel auto-induit, à travers les électrodes de potentiel (M, N), ce qui permet d'amplifier par conséquent la réponse mesurée ;
- amplifier à nouveau la réponse mesurée en utilisant l'amplificateur (14) ;
- filtrer la réponse amplifiée en utilisant le filtre anti-repliement (15), ce qui permet de réduire par conséquent les effets de repliement ;
- appliquer la réponse filtrée et amplifiée, du canal de signal (CH1) à la carte PCMCIA (Association internationale de cartes de mémoire pour ordinateurs personnels) d'acquisition de données multifonction (16) et à l'ordinateur portable (17) ;
- calculer la fonction de transfert électrique de la sous-surface en utilisant la référence provenant du canal de référence (CH0) et la réponse filtrée et amplifiée provenant du canal de signal (CH1).

3. Procédé de mesure de réponse de polarisation induite spectrale utilisant une source de courant à Séquence Binaire Pseudo Aléatoire (PRBS) selon la revendication 2, dans lequel le bloc d'alimentation haute tension (2) fournit une Tension CC allant jusqu'à 500 volts, à 1 ampère, au pont IGBT.

4. Procédé de mesure de réponse de polarisation induite spectrale utilisant une source de courant à Séquence Binaire Pseudo Aléatoire (PRBS) selon la revendication 2, dans lequel le bloc d'alimentation basse tension (3) en + 12 volts CC est fourni au circuit pilote de pont de transistor IGBT.

5. Procédé de mesure de réponse de polarisation induite spectrale utilisant une source de courant à Séquence Binaire Pseudo Aléatoire (PRBS) selon la revendication 2, dans lequel les références en temps de système GPS de précision et en fréquence (4, 9) génèrent une horloge à 10 MHz avec une stabilité de 1 sur $10^{11}$ et sont fournies au convertisseur d'échelle/diviseur.

6. Procédé de mesure de réponse de polarisation induite spectrale utilisant une source de courant à Séquence Binaire Pseudo Aléatoire (PRBS) selon la revendication 2, dans lequel le convertisseur d'échelle/diviseur (5, 10) génère des horloges à 4 Hz et 200 Hz.

7. Procédé de mesure de réponse de polarisation induite spectrale utilisant une source de courant à Séquence Binaire Pseudo Aléatoire (PRBS) selon la revendication 2, dans lequel l'entrée de générateur PRBS (6, 11) est prise du convertisseur d'échelle/diviseur, et des Séquences Binaires Pseudo Aléatoires de longueurs 31, 63 et 127 sont générées.

8. Procédé de mesure de réponse de polarisation induite spectrale utilisant une source de courant à Séquence Binaire Pseudo Aléatoire (PRBS) selon la revendication 2, dans lequel sont générées des impulsions de déclenchement de pilote IGBT (7) selon la séquence PRBS d'entrée.

9. Procédé de mesure de réponse de polarisation induite spectrale utilisant une source de courant à Séquence Binaire Pseudo Aléatoire (PRBS) selon la revendication 2, dans lequel le courant du pont de commutation en courant IGBT (8) est commuté alternativement (+ / -) dans le sous-sol à travers les électrodes de courant (A, B), lors de l'obtention des impulsions de déclenchement à partir du pilote.

10. Procédé de mesure de réponse de polarisation induite spectrale utilisant une source de courant à Séquence Binaire Pseudo Aléatoire (PRBS) selon la revendication 2, dans lequel une protection contre les surcharges, intégrée au courant du pilote IGBT (7), est détectée, et des déclencheurs du pont IGBT sont éteints lorsque le courant dépasse la limite.

11. Procédé de mesure de réponse de polarisation induite spectrale utilisant une source de courant à Séquence Binaire Pseudo Aléatoire (PRBS) selon la revendication 2, dans lequel une haute impédance d'entrée du préamplificateur (13) est présentée au signal reçu à partir des électrodes de potentiel (M, N), lequel est amplifié 10 fois avec une sortie à faible bruit.

12. Procédé de mesure de réponse de polarisation induite spectrale utilisant une source de courant à Séquence Binaire Pseudo Aléatoire (PRBS) selon la revendication 2, dans lequel le compensateur de potentiel auto-induit à travers les électrodes de potentiel (M, N) annule le potentiel auto-induit du sous-sol jusqu'à un maximum allant de +750 mV à -750 mV.

13. Procédé de mesure de réponse de polarisation induite spectrale utilisant une source de courant à Séquence Binaire Pseudo Aléatoire (PRBS) selon la revendication 2, dans lequel l'amplificateur (14) fournit des gains de 1, 10 et 100, qui peuvent varier jusqu'à $\pm$ 5 Volts, au signal de sortie provenant du préamplificateur ; et dans lequel le temporisateur d'échantillonnage (10) génère des impulsions d'échantillonnage pour l'acquisition de données et des impulsions d'horloge pour les filtres anti-repliement.

14. Procédé de mesure de réponse de polarisation induite spectrale utilisant une source de courant à Séquence Binaire Pseudo Aléatoire (PRBS) selon la revendication 2, dans lequel la carte d'acquisition de données (16) hébergée dans la fente de carte PCMCIA de l'ordinateur portable convertit des échantillons analogiques, en provenance du canal de référence et du canal de signal, en des données numériques avec une résolution de 16 bits ; et dans lequel sont calculées des estimations d'inter-corrélation et d'autocorrélation de données acquises.

15. Procédé de mesure de réponse de polarisation induite spectrale utilisant une source de courant à Séquence Binaire Pseudo Aléatoire (PRBS) selon la revendication 2, dans lequel la sous-surface est excitée avec une forme d'onde en courant PRBS, la puissance est distribuée uniformément dans la bande de 0,03 Hz à 100 Hz, et des dispositions sont prises en vue d'adapter la largeur de bande d'excitation.

Figure 1- (a)

Figure 1-(b)

Fig.2

+

0

on    off              off

on

−

Fig.3-(a)

Fig. 3-(b)

Fig.4 (a)

Fig.4-(b)

Fig.4-(c)

Fig. 5

Clock (T)

+1

0

-1

**63 clock length PRBS sequence**

Fig.6-(a)

m
a
g
n
i
t
u
d
e

1

0

$\tau$

Fig. 6-(b)

Normalized Power

1
0.9
0.8
0.7
0.6
0.5
0.4
0.3
0.2
0.1
0

1          2

Frequency (W/Wc) ----->

Fig.6-(C)

Fig.7-(a)

Fig.7-(b)

Fig.8-(a)

Fig.8-(b)

Fig. 9

Fig. 10

Fig.11

29

EP 2 102 688 B1

**DISPLAY**
MEASUREMENT OF PHASE & MAGINITUDE
SET STACK = 1 TO 10

Is STACK>10 — Yes

No

**DISPLAY**
Press valid KEY
JUMP TO MAIN
PROGRAMME

**DISPLAY**
FOR BAND I Press KEY 1
FOR BAND II Press KEY 2

Is KEY 1 Pressed? — Yes

No

Is KEY 2 Pressed?

Yes

**DISPLAY BAND II MEASUREMENT**

Acquire DATA & Stored in Buffer

Add DATA & Divide by STACK and store

Compute Auto & Cross correlation estimates and store in File (Microsoft Excel format)

DISPLAY AUTOCORRELATION DATA STORED IN c:resdata(dir) auto.xls FILE CROSSCORRELATION DATA STORED IN c:resdata(dir) cross.xls FILE

Compute Phase & Magnitude and store in file( Microsoft Excel format)

DISPLAY ENTER FILE NAME TO STORE MAGNITUDE & PHASE VALUES FILE NAME MAXIMUM 12 CHARACTERS FOR EXAMPLE DATA...XLS

Input file name & Press Enter KEY

DISPLAY MAGNITUDE AND PHASE VALUES ARE STORED IN c:resdata(dir) DATA.XLS

STOP

Display BAND I measurement

Acquire DATA & store in Buffer

Add DATA & divide by Stack and store

Compute Auto & Cross correlation estimates and store in File (Microsoft Excel format)

DISPLAY AUTOCORRELATION DATA STORED IN c:resdata(dir) auto.xls FILE CROSSCORRELATION DATA STORED IN c:resdata(dir) cross.xls FILE

Compute Phase & Magnitude and store in file( Microsoft Excel format)

DISPLAY ENTER FILE NAME TO STORE MAGNITUDE & PHASE VALUES FILE NAME MAXIMUM 12 CHARACTERS FOR EXAMPLE DATA...XLS

Input file name & Press Enter KEY

DISPLAY MAGNITUDE AND PHASE VALUES ARE STORED IN c:resdata(dir) DATA.XLS

STOP

30

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DUNCAN P M et al.** The development and applications of a wide band electromagnetic sounding system using a pseudo-noise source. *GEOPHYSICS, SOCIETY OF EXPLORATION GEOPHYSICISTS, TULSA, OK, US,* 01 August 1980, vol. 45 (8), ISSN 0016-8033, 1276-1296
- **W.H.PELTON ; S.H.WARD ; P.G.HALLOF ; W.R.SILL ; P.H.NELSON.** Mineral discrimination and removal of Inductive coupling effects with Multi frequency IP. *Geophysics,* April 1978, vol. 3, 588-609
- **VANVOORHIS,G.D. ; NELSON,P.H ; ORAKE,T.L.** Complex Resistivity spectrum of poryphyry copper mineralization. *GEOPHYSICS,* 1973, vol. 38, 49-60
- **M.R.FOSTER ; R.N.SLOANE.** The use of Pseudo noise sequences to code a pulsed neutron source. *Geophysics,* 1973, vol. 37, 481-487
- **E.A.QUINCY ; W.H.DAVENPORT ; T.E.LINDSAY.** Preliminary field results for a new transient induction system employing pseudo noise signals. *IEEE*
- **P.M.DUNCAN ; A.HWANG ; R.N.EDWARDS ; R.C.BALLEY ; G.D.GARLAND.** The development and application of wide band EM sounding system using a pseudo noise source. *Geophysics,* 1980, 1276-1296